# EUROPEAN PATENT SPECIFICATION

(11) **EP 2 554 411 B1**
(45) Date of publication and mention of the grant of the patent: **26.11.2014**
(21) Application number: 12005688.2
(22) Date of filing: 02.08.2012
(51) Int. Cl.: B60H 1/00, B60H 1/32

(54) **Refrigerating system for a vehicle and method of controlling a refrigerating system for a vehicle**
Kühlsystem für ein Fahrzeug und Verfahren zur Steuerung eines Kühlsystems für ein Fahrzeug
Système de réfrigération pour véhicule et procédé de contrôle d'un système de réfrigération pour véhicule

(30) Priority: 03.08.2011 DE 102011109322
(43) Date of publication of application: 06.02.2013
(73) Proprietor: Valeo Klimasysteme GmbH, 96476 Bad Rodach (DE)
(72) Inventor: Sondermann, Mark, 96479 Weitramsdorf (DE); Sonnenberger, Rainer, 14059 Berlin (DE)
(74) Representative: Prinz & Partner mbB

(56) References cited:
- EP-A2- 1 170 560
- DE-A1-102010 024 854
- FR-A1- 2 952 173
- US-A- 5 529 116
- US-A1- 2002 007 943

## Description

The invention relates to a refrigerating system for a vehicle, comprising a refrigerant circuit which includes a vehicle air-conditioning system having a condenser element for heating a vehicle interior and preferably a vaporizer element for cooling the vehicle interior, and a heat exchanger arranged in a feed air duct of the vehicle. The invention further relates to a method of controlling a refrigerating system for a vehicle.

Generic refrigerating systems for vehicles are known from the prior art, e.g. from US 2002/0007943 A1. A refrigerating system of this kind permits an operation as a heat pump, the heat exchanger arranged in the feed air duct extracting heat from the air and supplying the vehicle interior with heat via the condenser element. In particular in case of cool temperatures of the air between 0 °C and 10 °C, the temperature of the heat exchanger arranged in the feed air duct can drop below 0 °C at an appropriate heating power of the vehicle air-conditioning system. The air humidity in the ambient air condenses and freezes on the heat exchanger and forms an ice layer reducing the efficiency of the heat exchanger. The feed air duct is also called duct for useful air, i.e. duct for ambient air which enters the interior of the vehicle motor compartment and is used in the refrigerant system to cool refrigerant.

To obtain a thawing of the ice layer, the heat exchanger must be heated, the heating power of the refrigerating system in the vehicle interior being considerably reduced or completely interrupted. If the thawing of the heat exchanger requires an operation as a condenser, the heat pump is inverted and the vehicle interior is undesirably inevitably cooled.

The object of the invention is to provide a refrigerating system for a vehicle with a reduced ice formation on the heat exchanger, which preferably permits a continuous heating operation of the vehicle interior.

This object is achieved by a refrigerating system having the features of claim 1. The partitioning of the heat exchanger into a first and a second stage permits the operation at different temperatures.

The heat transfer fins of the first stage are arranged in the feed air duct upstream of the heat transfer fins of the second stage, i.e. upstream with respect to the air flowing through the feed air duct.

The heat exchanger has a first stage and at least a second stage each having preferably separate heat transfer fins. Owing to the respective separate heat transfer fins, a heat conduction between the two stages is prevented due to the fact that the heat transfer fins are spatially separated from each other.

The first stage of the heat exchanger can preferably be operated as a vaporizer, the cooling power, in particular the vaporizer temperature of the first stage being adapted to be controlled such that liquid water on the fins does not freeze. In this way, a drying of the air flowing through the feed air duct is possible by condensation of the air humidity on the heat transfer fins of the first stage. The condensed water can drain away from the heat transfer fins of the heat exchanger. Only dried air is supplied to the second stages of the heat exchanger arranged downstream, so that an icing of the second stages is prevented or at least considerably reduced. This permits a high efficiency for the operation of the heat exchanger as the heat transfer fins of the second stages can be operated with very cold temperatures.

An additional physical separation of water drops in the air flowing into the feed air duct of the vehicle can be obtained by means of a drip catcher provided in the feed air duct upstream of the heat exchanger.

A flexible utilization of the refrigerating system is permitted if at least the first stage of the heat exchanger and preferably all stages of the heat exchanger can be operated selectively as a vaporizer or as a condenser.

It is possible that at least two stages of the heat exchanger, preferably the first and at least a second stage are connected in parallel in a refrigerant circuit. The powers of the two stages can thus be controlled independently of each other.

It is furthermore possible that one or more air-side stages of the heat exchanger are subdivided on the refrigerant side into two or more segments which can be operated independently of each other. Theses stages can have common or separate fins. Due to this separation, the powers of the two stages can be controlled independently of each other. It is further possible to operate one segment as a vaporizer and, if necessary, a different segment as a condenser. This need occurs, for example, if the segment is very icy: it can then be deiced in the condenser mode, while the other segment or segments still function as a vaporizer. A switching of the entire stage in the condenser mode is thus prevented, as a result of which heat can still be produced for heating the vehicle interior for example, despite the deicing operation of the partial stage.

More particularly, two separate parallel refrigerant circuits with different refrigerants may be provided, at least two stages of the heat exchanger, preferably the first and at least a second stage being arranged in different refrigerant circuits. Due to the use of different refrigerants, the temperature range within which the refrigerating system can be operated efficiently can be enlarged.

The stages of the heat exchanger that are connected in parallel can preferably be operated independently of each other as a vaporizer or condenser. This permits the operation in a deicing mode, a stage to be deiced being adapted to be operated as a condenser, while the other stage can at the same time be operated as a vaporizer. The functioning of the vehicle air-conditioning system is thus independent of the deicing mode such that a heating of the vehicle interior is possible in particular during the deicing.

It is also contemplated that at least two stages of the heat exchanger, preferably the first stage and at least a second stage are connected in series in a refrigerant circuit, the stages connected in series being preferably arranged co-currently with the air in the feed air duct.

A switchable throttling point is preferably provided between the stages of the heat exchanger that are connected in series and permits a control of the pressure drop in the two stages. The stages of the heat exchanger that are connected in series can thus be operated as vaporizer with different and variable cooling powers.

The switchable throttling point may for example be a fixed throttle having a lockable bypass duct, a throttle valve which preferably can be opened entirely, or a pulse-width modulated solenoid valve.

The object of the invention is furthermore achieved by a method of controlling a refrigerating system for a vehicle, comprising a refrigerant circuit which includes a vehicle air-conditioning system having a condenser element for heating a vehicle interior and a vaporizer element for cooling the vehicle interior, and a multistage heat exchanger arranged in a feed air duct of the vehicle. A cooling mode in which the heat exchanger is operated as a condenser and a heating mode are provided. In the heating mode, the heat exchanger is operated as a vaporizer, the cooling power of a first stage of the heat exchanger being controlled or even regulated such that liquid water on the fins does not freeze. In this way, the feed air flowing through the feed air duct of the vehicle is dried at the first stage of the heat exchanger so that only dry air flows around the further stages of the heat exchanger, as a result of which an icing of the further stages of the heat exchanger is prevented.

A deicing mode is preferably provided, at least one stage of the heat exchanger being operated as a condenser, the heating power being regulated such that liquid water on the fins does not freeze, and at least one further stage of the heat exchanger being operated as a vaporizer. The heat exchanger thus forms an individual partial circuit of the refrigerant circuit the functioning of which is independent of the functioning of the remaining refrigerant circuit, in particular of the air-conditioning system.

The vehicle air-conditioning system can preferably be operated in the deicing mode for heating or cooling the vehicle interior.

The heat exchanger may comprise at least two stages that are connected in series and between which a switchable throttling point is provided, the throttling point being driven such that the temperature of the heat transfer fins of the first stage of the heat exchanger is regulated such that liquid water on the fins does not freeze, in that the temperature is above 0 °C, for example, and the compressor of the refrigerant circuit is operated at full power. The refrigerating system can thus be operated with a high efficiency without excessive risk of icing of the heat exchanger.

The heat exchanger may comprise at least two stages that are connected in series, an expansion valve being provided upstream of the first stage which is controlled by means of the pressure and/or the temperature downstream of the last stage.

Further features and advantages of the invention will become apparent from the description below and from the drawings to which reference is made and in which:
- Figure 1 shows a refrigerating system according to a first embodiment of the invention with stages of a heat exchanger connected in parallel;
- Figure 2 shows a refrigerating system according to a second embodiment of the invention having two separate refrigerant circuits;
- Figure 3 shows a refrigerating system according to a third embodiment of the invention with stages of a heat exchanger connected in series;
- Figure 4 shows a refrigerating system according to a fourth embodiment of the invention in a heating mode of a method according to the invention;
- Figure 5 shows the refrigerating system according to Figure 4 in a cooling mode of a method according to the invention;
- Figure 6 shows the refrigerating system of Figure 4 in a deicing mode of a method according to the invention; and
- Figure 7 shows a detailed view of an alternative embodiment of the heat exchanger of a refrigerating system according to the invention.

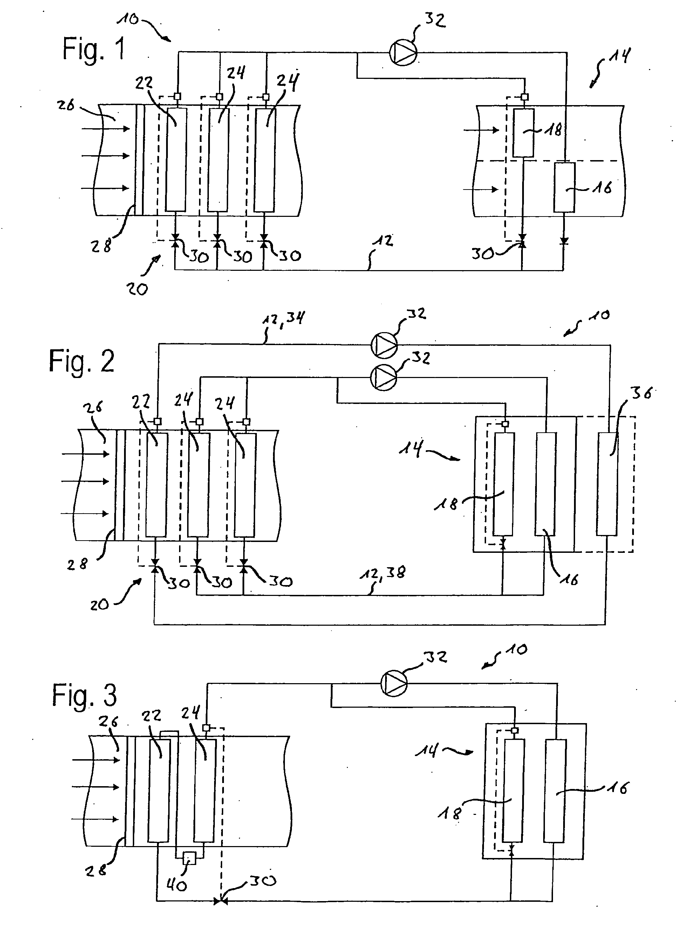

A first embodiment of a refrigerating system 10 for a vehicle is shown in Figure 1. The refrigerating system 10 has a refrigerant circuit 12 which includes a vehicle air-conditioning system 14 having a condenser element 16 and a vaporizer element 18 for heating and, respectively, cooling a vehicle interior. For heating and cooling the vehicle interior, fresh air and/or ambient air is sucked by a fan of the vehicle air-conditioning system 14 and passes the condenser element 16 or the vaporizer element 18, respectively, to absorb or deliver heat.

The refrigerant circuit 12 further includes a heat exchanger 20 which has three stages, for example, and comprises a first stage 22 and two second stages 24 in the first embodiment. According to the invention, the heat exchanger has at least two stages 22, 24. In the example embodiment shown in Figure 1, the heat exchanger even includes three stages 22, 24, 24. The heat exchanger 20 is arranged in a feed air duct 26 of the vehicle. The feed air duct 26 may for example be provided in the region of the engine cooling system at the front end of the vehicle. Ambient air enters the feed air duct 26 and flows therethrough in the flow direction indicated by the arrows.

The different stages 22, 24 of the heat exchanger 20 each have separate heat transfer fins which permit a good heat transfer between the refrigerant flowing through the refrigerant circuit 12 and the air flowing through the feed air duct 26. The first stage 22 or the heat transfer fins of the first stage 22 of the heat exchanger 20 are arranged in the feed air duct 26 upstream of the second stage 24 or of the heat transfer fins of the second stage 24, the second stages 24 being connected in series with respect to the flow in the feed air duct 26. Alternatively, the first stage 22 may however also be arranged downstream of the second stages 24 of the heat exchanger 20.

In the embodiment shown, the heat exchanger 20 is operated as a vaporizer.

The different stages of the heat exchanger 20 are each connected in parallel with respect to the refrigerant circuit, each stage 22, 24 having its own expansion valve 30. The vaporizer temperature of the respective stage 22, 24 can be controlled via the regulation by the expansion valve 30.

A drip catcher 28 is arranged in the feed air duct 26 upstream of the heat exchanger 20.

The functioning of the refrigerating system is explained below.

A compressor 32 in the refrigerant circuit 12 compresses gaseous refrigerant which is guided in the refrigerant circuit 12 to the condenser element 16 of the vehicle air-conditioning system 14. The hot gaseous refrigerant condenses in the condenser element 16 delivering heat to the vehicle interior. The liquid refrigerant is further guided to the heat exchanger 20 in the feed air duct 26 via the refrigerant circuit 12.

The expansion valves 30 associated with the respective stages 22, 24 of the heat exchanger 20 control the inflow of refrigerant into the respective stages 22, 24 of the heat exchanger 20. In this way, the cooling power of the respective stage 22, 24 is controlled. The cooling power of the first stage 22 is controlled such that liquid water on the fins does not freeze.

The ambient air of the vehicle can have a relatively high air humidity and aerosol droplets. After having entered the feed air duct 26, the ambient air flows first through the drip catcher 28 on which the aerosol droplets precipitate.

The air then flows through the first stage 22 of the heat exchanger 20. The temperature of the heat transfer fins is advantageously just above 0 °C, but can also be below 0 °C, as far as no water possibly present on the fins does not freeze.

If the temperature of the fins of the heat exchanger is at most just above 0 °C, the air humidity of the air flowing through the feed air duct 26 condenses on the cold heat transfer fins, as a result of which the air is dried. The water condensed on the first stage 22 of the heat exchanger 20 can simply drain away from the heat transfer fins as it is in a liquid phase at the temperature above 0 °C.

Only dried and/or dehumidified air flows to the second stages 24 arranged downstream of the first stage 22, so that a condensing of air humidity on the heat transfer fins of the second stages 24 is considerably reduced or completely avoided. It is therefore unproblematic to operate the second stages 24 of the heat exchanger 20 at temperatures of the heat transfer fins below 0 °C as accordingly, an icing of the heat transfer fins does not occur or only to a minor extent. The lower the temperatures of the second stages 24 of the heat exchanger 20 are, the more heat the refrigerant circuit 12 operated as a heat pump can extract from the air mass flow.

The cooling power of the two second stages 24 can be adapted at random to the required power, but the temperature of the heat transfer fins of the respective stages 24 can also be below 0 °C.

The cooling powers of the second stages 24 are preferably adapted to each other such that the temperature of the heat transfer fins of the respective stages 24 decreases in the direction of the flow direction of the air through the feed air duct 26.

In an alternative embodiment not shown here, a heating means can be arranged in the feed air duct 26 downstream of the heat exchanger 20. This heating means can be used to deice the heat exchanger 20, in particular the first stage 22. Depending on certain external influences, the first stage 24 can freeze after a certain time. To improve the power of the refrigerating system 10, the heating means can heat and thus deice the heat exchanger 20.

A second embodiment of a refrigerating system 10 is shown in Figure 2. The refrigerating system 10 includes two separate parallel refrigerant circuits 12 with different refrigerants. By analogy with the previous embodiment, the heat exchanger 20 in the feed air duct 26 is configured with a first stage 22 and two second stages 24 which can each be operated in parallel. In this embodiment, the heat exchanger 20 also has two second stages 24. However, in addition to the first stage 22, the refrigerating system 10 can also have only one or several second stages 24.

Unlike the previous embodiment, the first stage 22 of the heat exchanger 20 is incorporated into a first refrigerant circuit 34. The first refrigerant circuit 34 furthermore comprises a compressor 32 and a condenser element 36. The condenser element 36 can be incorporated into the vehicle air-conditioning system 14 or can be provided at another place in the vehicle.

The two second stages 24 of the heat exchanger 20 are integrated into a second refrigerant circuit 38, which incidentally is configured analogously to the refrigerant circuit of the first embodiment. The vehicle air-conditioning system 14 with the condenser element 16 and the vaporizer element 18 is represented in a simplified manner.

Due to the use of different refrigerants, the temperature range within which the refrigerating system 10 can be operated efficiently can be increased. To this end, it is for example possible to use in the refrigerant circuit 34 of the first stage 22 of the heat exchanger 20 the refrigerant 1234YF which permits temperatures of up to - 20 °C. The refrigerant R744 is for example used in the second refrigerant circuit 38 of the second stages 24 of the heat exchanger 20, as a result of which the overall temperature range of the refrigerating system 10 can be extended from approximately -50 °C to 80 °C.

One of the two refrigerant circuits 34, 38, in particular the R744 circuit can be used for a battery temperature control, in particular in connection with a cooling water circuit or, depending on the function, a heating circuit on the basis of an indirect battery temperature control. Alternatively, a direct cooling or heating of the battery by the refrigerant is for example possible, which is based on a direct battery temperature control.

A cooling water circuit can in addition be used as a heat pump between the two refrigerant circuits 34, 38.

A third embodiment of the refrigerating system 10 is shown in figure 3. This embodiment differs from the first embodiment in that the heat exchanger 20 includes a first stage 22 and a second stage 24 which are connected in series in the refrigerant circuit 12.

A fixed or switchable throttling point 40 is provided between the first stage 22 and the second stage 24 and permits a control or regulation of the pressure drop between the two stages. A common expansion valve 30 of the two stages 22, 24 of the heat exchanger 20 is controlled by means of the pressure and/or the temperature downstream of the last stage 24 of the heat exchanger 20.

The switchable throttling point 40 can be configured in a simple design as a fixed throttle having a predefined opening and a lockable bypass duct. Alternatively, an adjustable throttle valve can be provided which is preferably to be opened completely.

A pulse-width modulated solenoid valve can furthermore fulfill the function of the switchable throttling point 40. This permits an optimal control or regulation of the pressure drop of the first and second stages 22, 24 of the heat exchanger 20.

To be able to operate the refrigerant system 10 with high efficiency, the switchable throttling point 40 is advantageously driven such that the temperature of the heat transfer fins of the first stage 22 of the heat exchanger 20 is maintained above 0 °C, while the compressor 32 of the refrigerant circuit 12 is operated at full power. One the one hand, a high efficiency of the refrigerating system 10 and on the other hand a low icing of the heat exchanger 20 is thus ensured.

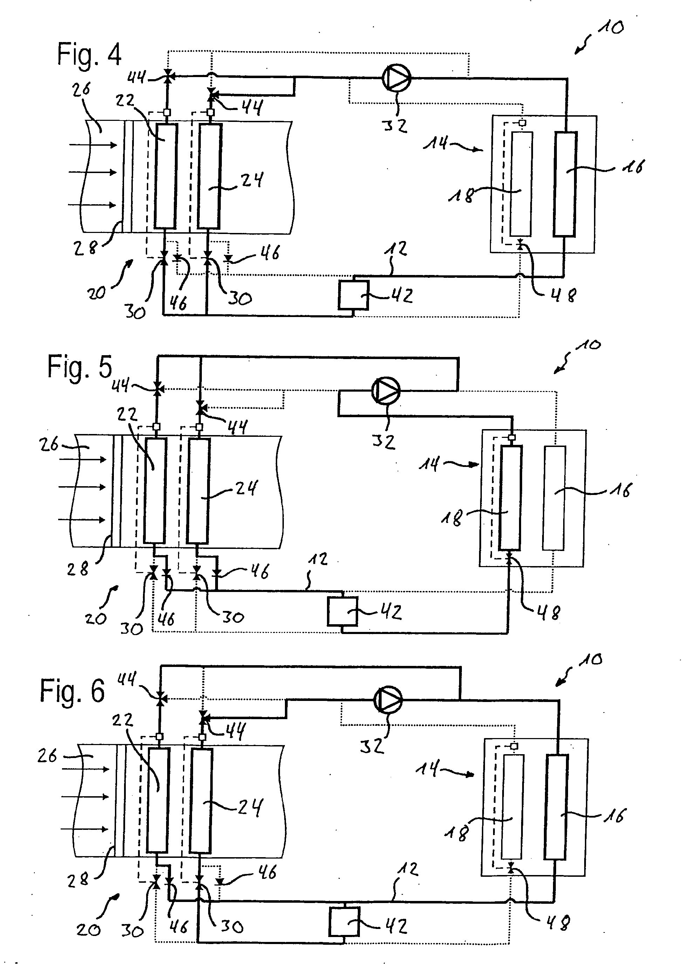

Figures 4 to 6 show a fourth embodiment of a refrigerating system 10 which permits an operation in three operating modes. Figure 4 illustrates the first operating mode by the solid lines of the refrigerant circuits 12, a heating of the vehicle interior being permitted. The pipes shown in dotted lines are not required in the respective operating modes.

Figure 5 shows the fourth embodiment of the refrigerating system 10 in a cooling mode for cooling the vehicle interior, and Figure 6 in a deicing mode which permits a deicing of the heat exchanger 20 in the feed air duct 26 independently of the operation of the vehicle air-conditioning system 14.

The heat exchanger 20 of the fourth embodiment of the refrigerating system 10 includes a first stage 22 and a second stage 24 which can each be operated selectively as a vaporizer or condenser. However, in this embodiment as well, the heat exchanger 20 can have several second stages 24, in particular two second stages 24 in addition to the first stage 22.

By analogy with the embodiments shown in Figures 1 and 2, the second stages 24 can be arranged in parallel or, as shown in Figure 3, in series.

As shown in Figure 2, for example, a second refrigerant circuit can furthermore be provided.

Figure 4 shows the refrigerating system 10 in the heating mode, both stages 22, 24 of the heat exchanger 20 being operated as A vaporizer. Starting from the compressor 32, the compressed refrigerant flows in the refrigerant circuit 12 through the condenser element 16 of the vehicle air-conditioning system 14 and thus permits a heating of the vehicle interior.

After the condenser element 16, a phase mixture composed of condensed liquid refrigerant and gaseous refrigerant is present which is supplied to a refrigerant reservoir 42. The liquid phase of the refrigerant collects in the refrigerant reservoir 42. The reservoir 42 is connected with the two expansion valves 30 of the two stages 22, 24 of the heat exchanger 20 via a withdrawal connection.

The expansion valves 30 regulate the amount of liquid refrigerant which can expand in the respective stages 22, 24 of the heat exchanger 20 and thus control the cooling power of the respective associated stage 22, 24. The first stage 22 and the second stage 24 can be operated analogously to the previous embodiments so that the temperature of the heat transfer fins is adjusted such that liquid water on the fins does not freeze and the temperature of the first stage 22 is advantageously permanently above 0 °C.

The connections of the two stages 22, 24 of the heat exchanger 20 opposite the expansion valves 30 are each provided with a three-way valve 44 which is adapted to connect the associated connection of the heat exchanger stages 22, 24 selectively with the low pressure side or the high pressure side of the compressor 32.

In the heating mode in which both stages 22, 24 of the heat exchanger 20 are operated as a vaporizer, the three-way valves 44 connect each heat exchanger stage 22, 24 with the low pressure side of the compressor 32.

By switching the two three-way valves 44, the operating mode is changed to the cooling mode. The two stages 22, 24 of the heat exchanger 20 are connected with the high pressure side of the compressor 32 so that hot compressed gaseous refrigerant flows through the two heat exchanger stages 22, 24. The flow occurs in the reverse direction with respect to the flow in the vaporizer mode. As the heat transfer fins of the two stages 22, 24 of the heat exchanger 20 are hot in the condenser mode, a condensing of air humidity is unproblematic and a temperature control or regulation with respect thereto unnecessary.

After having flown through the two heat exchanger stages 22, 24, a mixture of liquid and gaseous refrigerant is again present. In this operating mode, the expansion valves 30 are completely closed, and the refrigerant flowing out of the two heat exchanger stages 22, 24 is guided to the refrigerant reservoir 42 via pipes of the refrigerant circuit 12 each provided with shutoff valves 46.

The refrigerant reservoir 42 has its withdrawal connection connected with the vaporizer element 18 of the vehicle air-conditioning system 14 via an expansion valve 48.

The refrigerant reservoir 42 prevents on the one hand abrupt pressure variations in the refrigerant circuit 12 when the operating mode is changed, and permits on the other hand a liquid management in the high pressure branch of the refrigerant circuit 12 so that it is possible to ensure that only refrigerant in a liquid phase reaches the vaporizer element 18 of the vehicle air-conditioning system 14 or the stages 22, 24 of the heat exchanger 20 operated as a vaporizer.

The shutoff valves 46 are preferably actively switchable. It is however also possible that the shutoff valves 46 are configured as check valves.

As the two stages 22, 24 of the heat exchanger 20 in the fourth embodiment of the refrigerating system 10 are integrated in the refrigerant circuit 12 parallel to each other, it is possible to operate the one stage 22 or 24, respectively as a condenser, while the other stage 24 or 22, respectively can simultaneously be operated as a vaporizer. In this way, the two stages 22, 24 of the heat exchanger 20 form an individual partial circuit of the refrigerant circuit 12 which can be operated independently of the working of the vehicle air-conditioning system 14.

This mode of operation is represented in Figure 6, the first stage 22 of the heat exchanger 20 being operated as a condenser, while the second stage 24 of the heat exchanger 20 is simultaneously operated as a vaporizer. This mode of operation is called deicing mode as in case of a possible icing of one of the stages 22, 24 of the heat exchanger 20, the latter can temporarily be operated as a condenser, the heat transfer fins of the respective stage being heated and the ice layer thus thawed.

The expansion valves can also be arranged between the three-way valve 44 and the heat exchanger 20. These expansion valves can be bypassed depending on the desired operating state (heating, cooling ...). The first stage 22 can in the same way be operated as a vaporizer and the second stage 24 as a condenser to deice the second stage 24.

Furthermore, switching valves may be arranged at the output of the compressor 32 to regulate the refrigerant flow selectively through the condenser 26 and/or the heat exchanger 20.

The input and/or the output of the refrigerant reservoir 42 may in addition be provided with switching valves to control the refrigerant flow through the refrigerant reservoir 42.

The features and advantages of the different embodiments shown can also be combined with each other. The heat exchangers 20 of the previous embodiments can in particular be operated selectively as a vaporizer or condenser by an appropriate connecting of the respective stages 22, 24 of the heat exchanger 20 by means of an additional three-way valve 44 and a shutoff valve 46.

It is also possible that the heat exchanger 20 includes stages 22, 24 connected both in parallel and in series. In the first and in the second embodiments, the two second stages could for example each be connected in series.

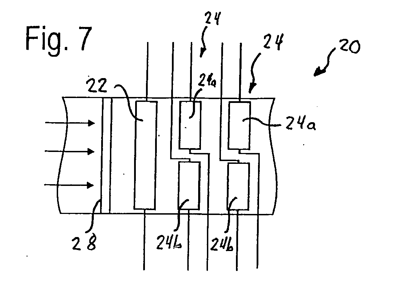

An alternative configuration of a heat exchanger 20 is shown in Figure 7. Here, the stages 24 are subdivided into several segments 24a, 24b which can each be operated independently of each other. These stages 24 can have common or separate fins. Due to this separation, the powers of the two stages 24 can be controlled independently of each other so that a segment 24a, 24b can be operated as a vaporizer and another segment 24a, 24b, if necessary, can be operated as a condenser, for example. This need occurs for example if one segment 24a, 24b is very icy. This segment 24a, 24b can then be deiced in the condenser mode, while the other segment 24a, 24 or segments 24a, 24b, respectively still work as vaporizers. It is thus prevented that the entire stage 24 is switched to the condenser mode, as a result of which it is still possible to generate heat for heating the vehicle interior, for example, despite the deicing operation of the partial stage.

## Claims

1. A refrigerating system (10) for a vehicle, comprising a refrigerant circuit (12) which includes a vehicle air-conditioning system (14) having a condenser element (16) for heating a vehicle interior and preferably a vaporizer element (18) for cooling the vehicle interior, and a heat exchanger (20) arranged in a feed air duct (26) of the vehicle,
**characterized in that**
the heat exchanger (20) has a first stage (22) and at least a second stage (24) having heat transfer fins, the heat transfer fins being arranged in the feed air duct (26),
wherein the heat transfer fins of the first stage (22) are arranged in the feed air duct (26) upstream of the heat transfer fins of the second stage (24).

2. The refrigerating system according to claim 1, **characterized in that** the first stage (22) and the second stage (24) of the heat exchanger (20) each have separate heat transfer fins.

3. The refrigerating system according to any of the preceding claims, **characterized in that** the first stage (22) and/or the second stage (24) of the heat exchanger (20) can be operated as a vaporizer, the cooling power of the first stage (22) being adapted to be controlled such that liquid water on the fins does not freeze.

4. The refrigerating system according to any of the preceding claims, **characterized in that** a drip catcher (28) is provided in the feed air duct (26) upstream of the heat exchanger (20).

5. The refrigerating system according to any of the preceding claims, **characterized in that** at least the first stage (22) of the heat exchanger (20), preferably all stages (22, 24) of the heat exchanger (20) can be operated selectively as a vaporizer or as a condenser.

6. The refrigerating system according to any of the preceding claims, **characterized in that** at least two stages (22, 24) of the heat exchanger (20), preferably the first stage (22) and at least a second stage (24) are connected in parallel in a refrigerant circuit (12).

7. The refrigerating system according to any of the preceding claims, **characterized in that** one or more air-side stages (22, 24) of the heat exchanger (20) are subdivided on the refrigerant side into two or more segments which can be operated independently of each other, the stages having common or separate fins.

8. The refrigerating system according to any of the preceding claims, **characterized in that** two separate parallel refrigerant circuits (12, 34, 38) with different refrigerants are provided, at least two stages (22, 24) of the heat exchanger (20), preferably the first stage (22) and at least a second stage (24) being arranged in different refrigerant circuits (12, 34, 38).

9. The refrigerating system according to any of claims 6 to 8, **characterized in that** the stages (22, 24) of the heat exchanger (20) that are connected in parallel can be operated independently of each other as a vaporizer or condenser.

10. The refrigerating system according to any of the preceding claims, **characterized in that** at least two stages (22, 24) of the heat exchanger (20), preferably the first stage (22) and at least a second stage (24) are connected in series in a refrigerant circuit (12), the stages (22, 24) that are connected in series being preferably arranged co-currently with the air in the feed air duct (26).

11. The refrigerating system according to any of the preceding claims, **characterized in that** a fixed or switchable throttling point (40) is provided between the stages (22, 24) of the heat exchanger (20) that are connected in series, the throttling point permitting a control of the pressure drop between the two stages (22, 24).

12. A method of controlling a refrigerating system (10) for a vehicle according to any of the preceding claims, comprising a refrigerant circuit (12) which includes a vehicle air-conditioning system (14) having a condenser element (16) for heating a vehicle interior and a vaporizer element (18) for cooling the vehicle interior, and a multistage heat exchanger (20) arranged in a feed air duct (26) of the vehicle,
a cooling mode being provided, in which the heat exchanger (20) is operated as a condenser; and
a heating mode being provided, in which the heat exchanger (20) is operated as a vaporizer, the cooling power of a first stage (22) of the heat exchanger (20) being controlled such that liquid water on the fins does not freeze.

13. The method according to claim 12, **characterized in that** a deicing mode is provided, at least one stage (22, 24) of the heat exchanger (20) being operated as a condenser, the heating power being regulated such that liquid water on the fins does not freeze, at a least one further stage (22, 24) of the heat exchanger (20) being operated as a vaporizer.

14. The method according to claim 13, **characterized in that** in the deicing mode, the vehicle air-conditioning system (14) can be operated to heat or cool the vehicle interior.

15. The method according to claims 12 to 14, **characterized in that** the heat exchanger (20) has at least two stages (22, 24) that are connected in series and between which a switchable throttling point (40) is provided, the throttling point (40) being driven such that the temperature of the heat transfer fins of the first stage of the heat exchanger is adapted correspondingly so that liquid water cannot freeze on the fins, and **in that** the compressor (32) of the refrigerant circuit (12) is operated at full power.

16. The method according to claims 12 to 15, **characterized in that** the heat exchanger (20) has at least two stages (22, 24) that are connected in series, an expansion valve (30) being provided upstream of the first stage, which is controlled by means of the pressure and/or the temperature downstream of the last stage (22, 24).

## Patentansprüche

1. Kälteanlage (10) für ein Fahrzeug, mit einem Kältemittelkreislauf (12), der eine Fahrzeugklimaanlage (14) mit einem Kondensatorelement (16) zum Heizen eines Fahrzeuginnenraums und vorzugsweise einem Verdampferelement (18) zur Kühlung des Fahrzeuginnenraums und einen in einem Zuluftkanal (26) des Fahrzeugs angeordneten Wärmetauscher (20) umfasst,
**dadurch gekennzeichnet, dass**
der Wärmetauscher (20) eine erste Stufe (22) und zumindest eine zweite Stufe (24) mit Wärmeübertragungslamellen aufweist, wobei die Wärmeübertragungslamellen im Zuluftkanal (26) angeordnet sind,
wobei die Wärmeübertragungslamellen der ersten Stufe (22) stromaufwärts der Wärmeübertragungslamellen der zweiten Stufe (24) im Zuluftkanal (26) angeordnet sind.

2. Kälteanlage nach Anspruch 1, **dadurch gekennzeichnet, dass** die erste Stufe (22) und die zweite Stufe (24) des Wärmetauschers (20) jeweils separate Wärmeübertragungslamellen aufweisen.

3. Kälteanlage nach einem der vorhergehenden Ansprüche, **dadurch gekennzeichnet, dass** die erste Stufe (22) und/oder die zweite Stufe (24) des Wärmetauschers (20) als Verdampfer betrieben werden kann/können, wobei die Kühlleistung der ersten Stufe (22) so steuerbar ist, dass flüssiges Wasser auf den Lamellen nicht gefriert.

4. Kälteanlage nach einem der vorhergehenden Ansprüche, **dadurch gekennzeichnet, dass** ein Tropfenfänger (28) im Zuluftkanal (26) stromaufwärts des Wärmetauschers (20) vorgesehen ist.

5. Kälteanlage nach einem der vorhergehenden Ansprüche, **dadurch gekennzeichnet, dass** zumindest die erste Stufe (22) des Wärmetauschers (20), vorzugsweise alle Stufen (22, 24) des Wärmetauschers (20), wahlweise als Verdampfer oder als Kondensator betrieben werden kann/können.

6. Kälteanlage nach einem der vorhergehenden Ansprüche, **dadurch gekennzeichnet, dass** zumindest zwei Stufen (22, 24) des Wärmetauschers (20), vorzugsweise die erste Stufe (22) und zumindest eine zweite Stufe (24), in einem Kältemittelkreislauf (12) parallel geschaltet sind.

7. Kälteanlage nach einem der vorhergehenden Ansprüche, **dadurch gekennzeichnet, dass** eine oder mehrere luftseitige Stufen (22, 24) des Wärmetauschers (20) kältemittelseitig in zwei oder mehrere Segmente unterteilt sind, die unabhängig voneinander betrieben werden können, wobei die Stufen gemeinsame oder getrennte Lamellen haben.

8. Kälteanlage nach einem der vorhergehenden Ansprüche, **dadurch gekennzeichnet, dass** zwei getrennte parallele Kältemittelkreisläufe (12, 34, 38) mit unterschiedlichen Kältemitteln vorgesehen sind, wobei zumindest zwei Stufen (22, 24) des Wärmetauschers (20), vorzugsweise die erste Stufe (22) und zumindest eine zweite Stufe (24), in verschiedenen Kältemittelkreisläufen (12, 34, 38) angeordnet sind.

9. Kälteanlage nach einem der Ansprüche 6 bis 8, **dadurch gekennzeichnet, dass** die parallel geschalteten Stufen (22, 24) des Wärmetauschers (20) unabhängig voneinander als Verdampfer oder Kondensator betrieben werden können.

10. Kälteanlage nach einem der vorhergehenden Ansprüche, **dadurch gekennzeichnet, dass** zumindest zwei Stufen (22, 24) des Wärmetauschers (20), vorzugsweise die erste Stufe (22) und zumindest eine zweite Stufe (24), in einem Kältemittelkreislauf (12) in Serie geschaltet sind, wobei die in Serie geschalteten Stufen (22, 24) vorzugsweise im Gleichstrom mit der Luft im Zuluftkanal (26) angeordnet sind.

11. Kälteanlage nach einem der vorhergehenden Ansprüche, **dadurch gekennzeichnet, dass** eine fixe oder schaltbare Drosselstelle (40) zwischen den in Serie geschalteten Stufen (22, 24) des Wärmetauschers (20) vorgesehen ist, welche eine Steuerung des Druckabfalls zwischen den beiden Stufen (22, 24) ermöglicht.

12. Verfahren zur Steuerung einer Kälteanlage (10) für ein Fahrzeug nach einem der vorhergehenden Ansprüche, mit einem Kältemittelkreislauf (12), der eine Fahrzeugklimaanlage (14) mit einem Kondensatorelement (16) zum Heizen eines Fahrzeuginnenraums und einem Verdampferelement (18) zur Kühlung des Fahrzeuginnenraums und einen in einem Zuluftkanal (26) des Fahrzeugs angeordneten mehrstufigen Wärmetauscher (20) umfasst, wobei
ein Kühlungsmodus vorgesehen ist, in dem der Wärmetauscher (20) als Kondensator betrieben wird, und
ein Heizungsmodus vorgesehen ist, in dem der Wärmetauscher (20) als Verdampfer betrieben wird, wobei die Kühlleistung einer ersten Stufe (22) des Wärmetauschers (20) so gesteuert wird, dass flüssiges Wasser auf den Lamellen nicht gefriert.

13. Verfahren nach Anspruch 12, **dadurch gekennzeichnet, dass** ein Enteisungsmodus vorgesehen ist, wobei zumindest eine Stufe (22, 24) des Wärmetauschers (20) als Kondensator betrieben wird, wobei die Heizleistung so geregelt wird, dass flüssiges Wasser auf den Lamellen nicht gefriert, und zumindest eine weitere Stufe (22, 24) des Wärmetauschers (20) als Verdampfer betrieben wird.

14. Verfahren nach Anspruch 13, **dadurch gekennzeichnet, dass** die Fahrzeugklimaanlage (14) im Enteisungsmodus zum Heizen oder Kühlen des Fahrzeuginnenraums betrieben werden kann.

15. Verfahren nach Anspruch 12 bis 14, **dadurch gekennzeichnet, dass** der Wärmetauscher (20) zumindest zwei in Serie geschaltete Stufen (22, 24) aufweist, zwischen denen eine schaltbare Drosselstelle (40) vorgesehen ist, wobei die Drosselstelle (40) so angesteuert wird, dass die Temperatur der Wärmeübertragungslamellen der ersten Stufe des Wärmetauschers entsprechend angepasst wird, damit flüssiges Wasser auf den Lamellen nicht gefrieren kann, und dass der Kompressor (32) des Kältemittelkreislaufs (12) mit voller Leistung betrieben wird.

16. Verfahren nach Anspruch 12 bis 15, **dadurch gekennzeichnet, dass** der Wärmetauscher (20) zumindest zwei in Serie geschaltete Stufen (22, 24) aufweist, wobei vor der ersten Stufe ein Expansionsventil (30) vorgesehen ist, welches mittels des Drucks und/oder der Temperatur nach der letzten Stufe (22, 24) gesteuert wird.

## Revendications

1. Système frigorifique (10) pour véhicule, présentant un circuit de réfrigérant (12) qui comprend un système de climatisation de véhicule (14) qui présente un élément condenseur (16) pour le chauffage d'un habitacle de véhicule et de préférence un élément évaporateur (18) pour le refroidissement de l'habitacle de véhicule, ainsi qu'un échangeur de chaleur (20) agencé dans un conduit d'amenée d'air (26) du véhicule,
**caractérisé en ce que**
l'échangeur de chaleur (20) présente un premier étage (22) et au moins un deuxième étage (24) comprenant des lames de transfert de chaleur, les lames de transfert de chaleur étant agencées dans le conduit d'amenée d'air (26),
les lames de transfert de chaleur du premier étage (22) étant agencées dans le conduit d'amenée d'air (26) en amont des lames de transfert de chaleur du deuxième étage (24).

2. Système frigorifique selon la revendication 1, **caractérisé en ce que** le premier étage (22) et le deuxième étage (24) de l'échangeur de chaleur (20) présentent chacun des lames de transfert de chaleur séparées.

3. Système frigorifique selon l'une des revendications précédentes, **caractérisé en ce que** le premier étage (22) et/ou le deuxième étage (24) de l'échangeur de chaleur (20) peut/peuvent fonctionner en tant qu'évaporateur, la puissance de refroidissement du premier étage (22) étant apte à être commandée de manière à ce que de l'eau liquide sur les lames ne gèle pas.

4. Système frigorifique selon l'une des revendications précédentes, **caractérisé en ce qu'**il est prévu un collecteur de gouttes (28) dans le conduit d'amenée d'air (26) en amont de l'échangeur de chaleur (20).

5. Système frigorifique selon l'une des revendications précédentes, **caractérisé en ce qu'**au moins le premier étage (22) de l'échangeur de chaleur (20), de préférence tous les étages (22, 24) de l'échangeur de chaleur (20) peut/peuvent sélectivement fonctionner en tant qu'évaporateur ou en tant que condenseur.

6. Système frigorifique selon l'une des revendications précédentes, **caractérisé en ce qu'**au moins deux étages (22, 24) de l'échangeur de chaleur (20), de préférence le premier étage (22) et au moins un deuxième étage (24) sont montés en parallèle dans un circuit de réfrigérant (12).

7. Système frigorifique selon l'une des revendications précédentes, **caractérisé en ce qu'**un ou plusieurs étages (22, 24) côté air de l'échangeur de chaleur (20) sont divisés du côté réfrigérant en deux segments ou plus qui peuvent fonctionner indépendamment les uns des autres, les étages présentant des lames communes ou séparées.

8. Système frigorifique selon l'une des revendications précédentes, **caractérisé en ce qu'**il est prévu deux circuits de réfrigérant (12, 34, 38) parallèles séparés avec différents réfrigérants, au moins deux étages (22, 24) de l'échangeur de chaleur (20), de préférence le premier étage (22) et au moins un deuxième étage (24) étant agencés dans différents circuits de réfrigérant (12, 34, 38).

9. Système frigorifique selon l'une des revendications 6 à 8, **caractérisé en ce que** les étages (22, 24) de l'échangeur de chaleur (20) qui sont montés en parallèle peuvent fonctionner indépendamment l'un de l'autre en tant qu'évaporateur ou en tant que condenseur.

10. Système frigorifique selon l'une des revendications précédentes, **caractérisé en ce qu'**au moins deux étages (22, 24) de l'échangeur de chaleur (20), de préférence le premier étage (22) et au moins un deuxième étage (24) sont montés en série dans un circuit de réfrigérant (12), les étages (22, 24) qui sont montés en série étant de préférence agencés à co-courant avec l'air dans le conduit d'amenée d'air (26).

11. Système frigorifique selon l'une des revendications précédentes, **caractérisé en ce qu'**il est prévu un point d'étranglement (40) fixe ou commutable entre les étages (22, 24) de l'échangeur de chaleur (20) montés en série, le point d'étranglement permettant une commande de la chute de pression entre les deux étages (22, 24).

12. Procédé de commande d'un système frigorifique (10) pour véhicule selon l'une des revendications précédentes, présentant un circuit de réfrigérant (12) qui comprend un système de climatisation de véhicule (14) qui présente un élément condenseur (16) pour le chauffage d'un habitacle de véhicule et un élément évaporateur (18) pour le refroidissement de l'habitacle de véhicule, ainsi qu'un échangeur de chaleur (20) à plusieurs étages agencé dans un conduit d'amenée d'air (26) du véhicule,
un mode de refroidissement étant prévu, dans lequel l'échangeur de chaleur (20) fonctionne en tant que condenseur ; et
un mode de chauffage étant prévu, dans lequel l'échangeur de chaleur (20) fonctionne en tant qu'évaporateur, la puissance de refroidissement d'un premier étage (22) de l'échangeur de chaleur (20) étant commandée de manière à ce que de l'eau liquide sur les lames ne gèle pas.

13. Procédé selon la revendication 12, **caractérisé en ce qu'**il est prévu un mode de dégivrage, au moins un étage (22, 24) de l'échangeur de chaleur (20) fonctionnant en tant que condenseur, la puissance de chauffage étant réglée de manière à ce que de l'eau liquide sur les lames ne gèle pas, au moins un étage supplémentaire (22, 24) de l'échangeur de chaleur (20) fonctionnant en tant qu'évaporateur.

14. Procédé selon la revendication 13, **caractérisé en ce que** dans le mode de dégivrage, le système de climatisation de véhicule (14) peut fonctionner de manière à chauffer ou à refroidir l'habitacle de véhicule.

15. Procédé selon les revendications 12 à 14, **caractérisé en ce que** l'échangeur de chaleur (20) présente au moins deux étages (22, 24) qui sont montés en série et entre lesquels il est prévu un point d'étranglement commutable (40), le point d'étranglement (40) étant piloté de manière à ce que la température des lames de transfert de chaleur du premier étage de l'échangeur de chaleur soit adaptée de manière correspondante de telle sorte que de l'eau liquide ne peut pas geler sur les lames, et **en ce que** le compresseur (32) du circuit de réfrigérant (12) fonctionne à pleine puissance.

16. Procédé selon les revendications 12 à 15, **caractérisé en ce que** l'échangeur de chaleur (20) présente au moins deux étages (22, 24) qui sont montés en série, une soupape de détente (30) étant prévue en amont du premier étage et étant commandée au moyen de la pression et/ou de la température en aval du dernier étage (22, 24).
